# DEMANDE DE BREVET EUROPEEN

(11) **EP 2 559 501 A1**
(43) Date de publication de la demande: **20.02.2013**
(21) Numéro de dépôt: 11447017.2
(22) Date de dépôt: 18.08.2011
(51) Int. Cl.: B22D 11/18, B22D 11/20, G01F 23/26, G01F 23/284

(54) **Bouclier de protection d'un capteur de mesure**

(71) Demandeur: Pavone, Amleto, 7380 Quievrain (BE)
(72) Inventeur: Pavone, Amleto, 7380 Quievrain (BE)
(74) Mandataire: Cauchie, Daniel

(57) **Abrégé**

L'invention se rapporte à un bouclier de protection thermique d'un capteur de mesure (11) du niveau d'acier liquide en lingotière de coulée continue, du genre cornière consommable comprenant deux ailes (1a, 2a), l'une assurant une fonction d'aile protectrice contre le rayonnement thermique, l'autre une fonction d'aile support et de positionnement sur ledit capteur.

Selon l'invention, ce bouclier est caractérisé en ce l'aile support (2a) est de longueur au plus égale ou sensiblement égale à celle de l'aile protectrice (la).

D'autre part, ce bouclier peut être solidarisé, de manière amovible, à un moyen support (B) apte à assurer son positionnement sur le capteur de mesure.

## Description

La présente invention se rapporte, d'une manière générale, à un bouclier de protection d'un capteur de mesure.

Plus précisément, l'invention concerne un bouclier de protection thermique d'un capteur de mesure du niveau d'acier liquide en lingotière de coulée continue, du genre cornière consommable comprenant deux ailes, l'une assurant une fonction d'aile protectrice contre le rayonnement thermique, l'autre une fonction d'aile support et de positionnement sur ledit capteur.

Depuis de nombreuses années, les critères de qualité de production d'acier en coulée continue sont tels que la nécessité de l'utilisation d'un contrôle de niveau de haute performance est universellement reconnue.

Les systèmes de mesure de dernière génération de type magnétique se sont imposés comme étant la référence dans le domaine de la détection du niveau d'acier liquide en lingotière. Dans le cadre de la technique de fabrication en coulée continue concernée par la présente invention, cette technologie magnétique nécessite l'installation d'un capteur de mesure sur le bord de la lingotière. Toutefois, la proximité de l'acier liquide rend le fonctionnement et la précision de ce capteur électromagnétique vulnérable aux variations thermiques et sujet à destruction par projections ou débordement d'acier. Il en résulte des effets négatifs avec un coût financier important.

De manière à pallier ces inconvénients, on utilise habituellement un accessoire de protection que l'on dépose sur le capteur de mesure à protéger. Cet accessoire de protection agit ainsi comme écran contre le rayonnement thermique provenant de l'acier liquide passant à travers le tube d'approvisionnement. D'autre part, cet écran stabilise la température interne du capteur contre les fréquentes variations qu'il est amené à subir et abaisse sa température de travail. De cette manière, la précision et la durée de vie de ce capteur de mesure s'en trouve améliorée.

Cet écran de protection connu se présente sous forme d'une cornière, ci-après « cornière connue » réalisée d'un seul tenant au départ d'un matériau fibreux et dont les ailes sont de longueur inégales. Il s'agit d'une pièce de consommation dont la durée de vie est en moyenne de 6 à 12 heures. Pour des raisons techniques expliquées ci-après, l'aile la plus longue est généralement de dimension double de l'aile la plus courte. Lorsque cette cornière connue est placée en position de travail, l'aile exposée au rayonnement est l'aile la plus courte laquelle vient s'insérer à la verticale entre le tube d'approvisionnement de l'acier liquide et ledit capteur de mesure en le recouvrant sur toute sa largeur. En conséquence, l'aile la plus courte, ci-après « aile protectrice », est celle qui assure la fonction souhaitée d'écran contre le rayonnement thermique et néfaste de l'acier liquide. L'aile la plus longue, ci-après « aile support », se retrouve par conséquent à l'horizontale sur le dessus dudit capteur. La fonction essentielle de cette aile support plus longue, et par conséquent d'un poids plus important, est de contrebalancer le poids de l'aile protectrice plus courte et moins lourde afin que la cornière connue, en raison de son propre poids, maintienne d'elle-même sa position sur le capteur de mesure et ne tombe pas dans la lingotière. Cette caractéristique est d'autant plus nécessaire que le processus de fabrication en coulée continue exige que la lingotière et, par conséquent également le capteur de mesure sur laquelle il est installé, soient continuellement en mouvement d'oscillations verticales d'une amplitude de l'ordre du centimètre. Les deux ailes étant réalisées à partir du même matériau et ayant la même épaisseur, on comprendra que si l'aile support est de dimension égale à l'aile protectrice, celles-ci auront le même poids et leur centre de gravité respectif (point d'équilibre), se situera presqu'au niveau de l'angle de la cornière connue. En conséquence, cette cornière tombera dans la lingotière à la moindre oscillation de cette dernière. Par contre, une augmentation de la longueur de l'aile support déplace ce point d'équilibre (centre de gravité) en sorte que plus l'aile support sera longue par rapport à l'aile protectrice et plus la cornière connue sera stable vis-à-vis des mouvements d'oscillations. Pour cette raison, la dimension de l'aile support, dans la technique antérieure, est double de celle de l'aile protectrice.

L'aile support, qui en fait n'a qu'une simple fonction mécanique, est réalisée dans un matériau consommable onéreux qui est identique à celui de l'aile protectrice.

Or, en raison des dégradations qui sont occasionnées par l'important rayonnement calorifique au niveau de l'aile protectrice, la cornière connue doit être renouvelée de manière périodique, en moyenne toutes les 6 à 12 heures, selon les conditions de travail spécifiques à chaque coulée continue.

Par conséquent, l'aile support représente une fraction importante du coût de cet écran de protection connu, ce qui constitue un réel inconvénient.

Une deuxième raison du renouvellement de la cornière connue est la suivante. Lors d'interventions particulières réalisées par les opérateurs de coulée continue et liées au processus de fabrication en lingotière, cette cornière peut être détruite par choc accidentel, en particulier lors d'un changement du tube d'approvisionnement en acier liquide ou lors d'un changement de répartiteur. En effet, dans sa forme actuelle, la cornière en question ne possédant aucun moyen de préhension est difficilement manipulable et est généralement laissée en position sur le capteur de mesure. Durant ces interventions, il est courant qu'elle soit détruite par choc accidentel. L'opérateur de coulée continue doit alors replacer, en position sur le capteur en question, une nouvelle cornière connue et s'approcher de manière temporaire mais risquée de la zone interdite où se trouve l'acier liquide en fusion.

Le renouvellement fréquent de cette cornière connue constitue, par conséquent, un désavantage supplémentaire en raison du coût relativement élevé d'un tel dispositif.

Or, il a été trouvé de manière surprenante, selon l'invention, que:
- l'aile support de la cornière connue ne subit pas d'altération sous l'effet de la chaleur lorsque celle-ci est en position sur le capteur de mesure,
- que l'angle formé par les deux ailes ne subit pas, lorsque cette cornière est en position sur le capteur de mesure, l'effet d'un rayonnement calorifique susceptible de le dégrader de manière significative, et que
- l'aile protectrice, qui elle se détériore jusqu'à ne plus pouvoir assumer sa fonction de protection, garde néanmoins des propriétés de résistance mécanique suffisantes pour assurer une fonction de support.

En conséquence, la présente invention a pour but de proposer, sur base de ces observations, un bouclier de protection thermique du genre indiqué précédemment, lequel s'est révélé capable de pallier les inconvénients de l'état de la technique répertoriés précédemment.

Pour atteindre ce but, le bouclier de protection thermique, du genre indiqué précédemment, est caractérisé en ce que l'aile support est de longueur au plus égale ou sensiblement égale à celle de l'aile protectrice.

Toutefois, selon un aspect préféré de l'invention, le bouclier de protection est caractérisé en ce que les deux ailes, à savoir l'aile protectrice et l'aile support, sont de longueurs égales ou sensiblement égales.

Dans ce mode de réalisation, chacune des deux ailes en question a successivement la fonction d'aile protectrice et la fonction d'aile support. En d'autres termes, il devient possible d'inverser la position de cette cornière de telle sorte que l'aile protectrice occupe la position de l'aile support et vice versa. Cette inversion de position et de fonction des deux ailes de la cornière selon l'invention est envisageable uniquement lorsque l'aile support est de longueur égale à la longueur de l'aile protectrice ou, à tout le moins, de longueur sensiblement égale, à la longueur de cette aile protectrice en sorte que la longueur de cette aile support reste suffisante pour constituer à son tour une aile protectrice.

Aussi, dans le cadre de la présente invention, on entend par « aile protectrice et aile support de longueurs sensiblement égales » deux ailes dont l'une est légèrement plus courte que l'autre, la longueur de cette aile plus courte restant suffisante pour que celle-ci puisse remplir la fonction d'aile protectrice tel qu'explicité précédemment. Par conséquent, par rapport à la longueur d'une des deux ailes prise comme longueur de référence pour une aile protectrice, la seconde aile peut être légèrement plus longue ou légèrement plus courte que la longueur de référence.

De même, dans le présent contexte, on désignera par:
« cornière symétrique »: une cornière selon l'invention dont l'aile support est de longueur égale ou sensiblement égale à la longueur de l'aile protectrice en sorte que la longueur de cette aile support reste suffisante pour constituer à son tour une aile protectrice
et par :
« cornière asymétrique » : une cornière selon l'invention dont la longueur de l'aile support est significativement inférieure à la longueur de l'aile protectrice en sorte que la longueur de cette aile support n'est plus suffisante pour constituer à son tour une aile protectrice.

Le bouclier de protection selon l'invention est habituellement réalisé en un matériau amagnétique, capable de résister à des rayonnements thermiques de températures proches de 800°C. A titre d'exemple, ce matériau réfractaire peut comprendre ou être composé de fibres alcalino-terreuses convenant au type d'application décrit ci-dessus.

Selon une autre caractéristique de l'invention, le bouclier de protection peut être solidarisé, de manière amovible, à un moyen support.

D'autre part, selon une caractéristique supplémentaire de l'invention, ce moyen support est réutilisable et exerce une fonction de contrepoids et de maintien en position de travail sur le capteur de mesure.

En fait, si l'aile de ce bouclier qui assume une fonction d'aile protectrice est généralement de longueur constante, la longueur de l'autre aile, à savoir l'aile support, peut varier, le cas échéant, dans de grandes proportions. Dans certaines configurations du bouclier selon l'invention, cette aile support peut ne représenter qu'une fraction minime de l'aile protectrice. En pareil cas de figure et selon les circonstances, il peut s'avérer nécessaire d'amplifier la notion d'aile support en solidarisant le bouclier selon l'invention à un moyen support supplémentaire, réutilisable et amovible. Ainsi, ce moyen support aura pour fonction essentielle d'établir une solidarisation au bouclier de protection, d'assurer un maintien de celui-ci en position de travail sur le capteur de mesure et d'exercer une fonction de contrepoids.

Ainsi, ce moyen support répond habituellement au moins aux caractéristiques suivantes selon lesquelles il devra :
- Etre réalisé dans un matériau amagnétique,
- Permettre une solidarisation aisée avec le bouclier de protection lorsque celui-ci se présente sous forme de cornière asymétrique ainsi qu'une désolidarisation également facilitée. Dans ce type de configuration, l'aile support est obligatoirement la seule à devoir être solidarisée au moyen support.
- Permettre également une solidarisation aisée avec ce bouclier de protection lorsque celui-ci se présente sous forme de cornière symétrique suivie d'une désolidarisation également facilitée. Cette solidarisation/désolidarisation sera réversible c'est-à-dire réalisable au niveau des deux ailes afin de pouvoir utiliser alternativement chacune de ces deux ailes comme aile protectrice et comme aile support. En conséquence, dans ce type de configuration, les deux ailes du bouclier sont successivement solidarisées au moyen support.
- Assurer le contrepoids nécessaire au maintien du bouclier de protection dans sa position de travail sur le capteur de mesure et ce, sans risque de glissement et de chute dans la lingotière suite aux mouvements d'oscillation de cette dernière.

Ce moyen support peut être élaboré à partir de divers matériaux pour autant que le matériau utilisé soit amagnétique, non conducteur électrique et insensible aux ondes magnétiques (Eddy current). Toutefois, la préférence sera donnée à un matériau pouvant résister à de hautes températures afin de contribuer à la sauvegarde du capteur de mesure en cas de débordement accidentel d'acier liquide. A titre d'exemples non limitatifs, un matériau époxyde ou un fluoropolymère par exemple du genre TEFLON^{®}, une résine haute température ou encore un composant mica peuvent être envisagés comme matériaux appropriés.

D'autre part, ce moyen support peut se présenter sous diverses configurations de formes, par exemple sous la forme d'une plaque servant de plateau receveur sur lequel vient se placer une des ailes du bouclier de protection ou d'un encadrement aux dimensions d'une aile ou de deux plaques superposées qui viennent enserrer une des ailes du bouclier protecteur ou encore sous d'autres formes dépendant d'impératifs imposés par l'utilisateur final, notamment des impératifs de poids, de hauteur, de résistance mécanique ou autres.

A titre d'exemples non limitatifs, la solidarisation du bouclier protecteur au moyen support peut être envisagée moyennant la mise en oeuvre d'un ou de plusieurs dispositifs choisis parmi des systèmes à plot(s), à glissière(s), à clip(s) de compression, une ou des roulette(s) excentrique(s), des systèmes de serrage par ressorts (plats, traction, compression, ou torsion) et toutes autres solutions appropriées accessibles dans le commerce.

Selon un mode de réalisation préféré de l'invention, le moyen support se présente sous la forme d'un dispositif formant pince. Cette pince est constituée de deux plaques dont l'aire est égale ou supérieure à l'aire d'une aile du bouclier de protection. Une série de ressorts de torsion sont installés entre ces deux plaques de sorte que ces dernières interagissent entre elles par la pression des ressorts. Les deux mâchoires de cette pince sont formées par les deux plaques entre lesquelles vient s'enserrer une des ailes de la cornière selon l'invention à savoir l'aile support. Ces plaques sont réalisées, préférentiellement, en mica, un matériau amagnétique, isolant électrique et aux propriétés mécaniques suffisantes pour résister à de nombreux chocs et assurer leur longévité. Ce matériau présente des propriétés thermiques remarquables puisqu'il peut résister à des températures de l'ordre de 750°C. Ces propriétés sont avantageusement mises à profit afin de contribuer à la sauvegarde du capteur de mesure en cas de débordement accidentel d'acier liquide.

Selon une autre caractéristique de l'invention, le moyen support comporte éventuellement au moins un moyen d'accrochage capable de coopérer avec un dispositif de manutention approprié pour la manipulation du bouclier de protection, selon l'invention, afin d'en assurer la pose et la dépose à distance de sécurité suffisante de l'acier en fusion. Ce dispositif de manutention peut correspondre, par exemple, à une perche munie d'un embout apte à coopérer avec le moyen d'accrochage.

A titre d'exemples non limitatifs, ce moyen d'accrochage peut être choisi parmi un ou plusieurs crochet(s), une ou plusieurs anse(s), un ou plusieurs tube(s) soudé(s) adéquatement, une ou plusieurs glissière(s), une ou plusieurs découpe(s) de forme appropriée et judicieusement positionnée(s) et toutes autres solutions pour autant qu'elles soient compatibles et adaptées par exemple à l'embout d'une perche de manutention à laquelle le moyen support doit être accroché.

Un moyen d'accrochage préféré, selon l'invention, consiste en au moins une anse. Généralement, on utilise une première anse, par exemple de forme rectangulaire, qui permet un guidage aisé du dispositif de manutention, notamment une perche, vers son point d'accrochage de façon à réaliser un arrimage facile et précis à distance et indissociable accidentellement pendant la manipulation. Une deuxième anse est également fixée symétriquement par rapport à la première afin que l'opérateur de coulée continue puisse se placer d'un côté ou de l'autre de la lingotière lors de la manipulation.

L'invention sera mieux comprise et d'autres buts, caractéristiques et avantages apparaîtront plus clairement à la lumière de la description explicative ci-après faite en référence aux dessins annexés donnés uniquement à titre d'exemple non limitatif illustrant un mode de réalisation de l'invention et dans lesquels :
- la figure 1 est une vue en élévation d'un écran de protection de l'état de la technique,
- la figure 2 est une vue latérale d'un mode de réalisation préféré d'un bouclier de protection selon l'invention solidarisé à un moyen support,
- la figure 3 est une vue arrière de la figure 2,
- la figure 4 est une représentation schématique en élévation d'un bouclier de protection selon l'invention placé dans sa position de travail.

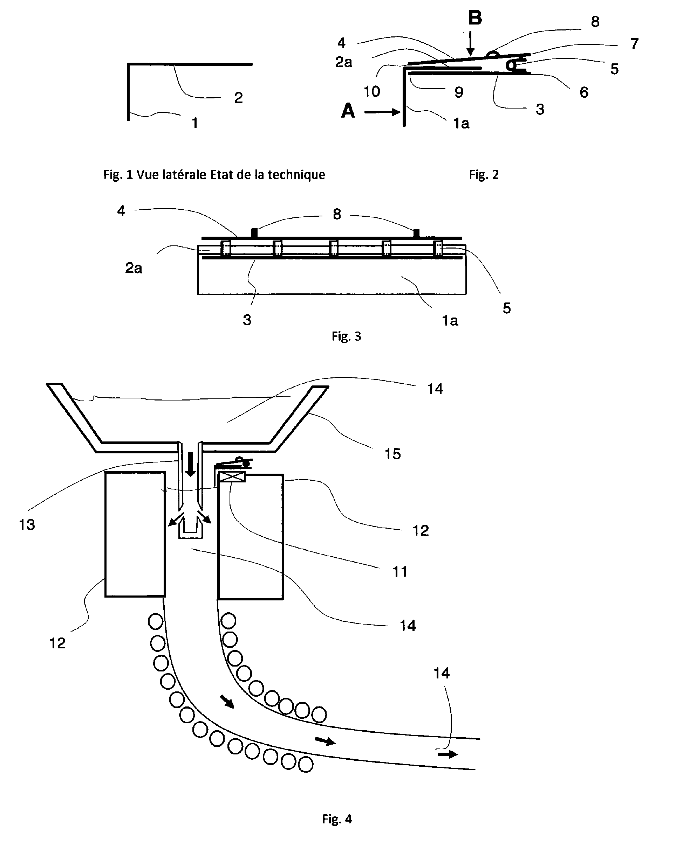

On a illustré, à la figure 1, un écran de protection configuré selon l'état de la technique. Cette cornière, qui est réalisée d'un seul tenant en un matériau fibreux, comprend une première aile 1, soit l'aile protectrice et une seconde aile 2, soit l'aile support. L'aile 1 a pour fonction d'assurer la protection thermique d'un capteur électromagnétique (non représenté) pour la mesure du niveau d'acier liquide d'une lingotière de coulée continue tandis que l'aile 2, qui est significativement plus longue que l'aile 1, exerce, en raison de cette particularité, une fonction de contrepoids à cette aile 1, lorsque la cornière est placée dans sa position de travail sur le capteur de mesure.

D'autre part, on a représenté, aux figures 2 et 3, un bouclier de protection thermique, selon l'invention, lequel est constitué d'une cornière A sous sa forme symétrique et d'un moyen support B. Cette cornière A, comprend deux ailes 1a, 2a d'égales longueurs. Cette cornière A symétrique est réalisée en un matériau réfractaire comprenant des fibres de silicate alcalino-terreux et dont la température de classification est de 1200°C. En outre, on observe un moyen support B constitué de deux plaques : une première plaque 3 solidarisée à une seconde plaque 4 par le biais de charnières 5 équipées de ressorts de torsion. Ces ressorts de torsion exercent une pression telle que les arêtes terminales, respectivement 6 et 7 des plaques 3 et 4, s'écartent et par opposition les arêtes, respectivement 9 et 10 se rapprochent tout en étant maintenues en pression. L'ensemble formé par les plaques 3 et 4 et par les charnières 5 avec ressorts constitue une pince articulée dont ces plaques 3 et 4 en sont les mâchoires. En outre, on remarque également, au niveau de la plaque 4, la présence de deux anses 8, dans le prolongement l'une de l'autre, ces anses étant susceptibles d'assurer, par leur intermédiaire, une attache avec une perche de manutention (non représentée).

A la lumière de ce qui précède et en référence aux figures 2 et 3, on comprend qu'une pression exercée sur les arêtes 6 et 7, en vue de les rapprocher, a pour effet d'écarter les arêtes opposées 9 et 10 et donc d'ouvrir la pince. Les mâchoires 3,4 de la pince support B étant ainsi ouvertes, l'aile 2a de la cornière A est alors disposée sur la plaque 3. La pression exercée sur les arêtes 6,7 est alors relâchée, ce qui provoque la fermeture des mâchoires 3,4 sur l'aile 2a qui se trouve ainsi enserrée et solidaire du moyen support B de par la pression exercée au niveau des arêtes 9 et 10. Au moyen d'une perche de manutention (non représentée) coopérant avec une des deux anses 8, le bouclier de protection ainsi constitué peut être manipulé à distance par l'opérateur de coulée continue pour être déposé sur le capteur électromagnétique 11 fixé sur le bord de la lingotière 12 de coulée continue. Ce bouclier de protection est disposé de telle manière que l'aile 1a de la cornière se situe, à la verticale, entre le capteur 11 et le tube réfractaire 13 d'amenée de l'acier 14 en fusion provenant du répartiteur 15, tel que représenté à la figure 4.

Après avoir assuré la protection du capteur de mesure 11 durant quelques heures, en moyenne 6 à 12 heures, le bouclier protecteur est alors enlevé de sa position de travail au moyen de la perche de manutention.

Par retournement de la cornière A symétrique et réversible, c'est-à-dire par placement de l'aile 1a et non plus 2a entre les mâchoires de la pince B articulée, le bouclier thermique est ainsi régénéré et peut être remis en place sur le capteur de mesure pour une deuxième utilisation.

Le bouclier selon l'invention s'est révélé particulièrement efficace comparativement à l'écran protecteur antérieur.

Ainsi la mise en oeuvre de ce bouclier est particulièrement aisée, par rapport à la technique antérieure.

D'autre part, l'invention permet à l'opérateur de coulée continue d'effectuer facilement et à distance de sécurité de l'acier en fusion, la dépose avant les interventions qui le nécessitent et une nouvelle pose une fois les interventions terminées. La cornière est ainsi préservée de la destruction accidentelle et l'opérateur travaille en respect des conditions sécuritaires.

En outre, comparativement à l'écran de protection connu, le bouclier de protection, selon l'invention:
- peut être réalisé avec un minimum de matériau consommable suite à une possibilité de réduction importante des dimensions de l'aile support de l'écran de protection connu. Cette aile, particulièrement onéreuse, pourra être réduite dans différentes proportions et selon le but qui lui sera assigné, par exemple pour n'en conserver qu'une portion qui pourra assurer, le cas échéant, une fonction d'aile protectrice,
- peut offrir, par suite d'une réduction de la taille de l'aile support, la possibilité d'utiliser, de manière successive et comme éléments protecteurs, les deux ailes de la cornière doublant ainsi la durée d'utilisation de cette pièce consommable et diminuant à nouveau, par la même occasion et de manière importante, le prix de revient.

## Revendications

1. Bouclier de protection thermique d'un capteur de mesure (11) du niveau d'acier liquide en lingotière de coulée continue, du genre cornière consommable comprenant deux ailes (1a, 2a), l'une assurant une fonction d'aile protectrice contre le rayonnement thermique l'autre une fonction d'aile support et de positionnement sur ledit capteur, **caractérisé en ce que** l'aile support (2a) est de longueur au plus égale ou sensiblement égale à celle de l'aile protectrice (la).

2. Bouclier de protection selon la revendication 1, **caractérisé en ce qu'**il est solidarisé, de manière amovible, à un moyen support (B).

3. Bouclier de protection, selon la revendication 1 ou 2, **caractérisé en ce que** le moyen support (B) est réutilisable et exerce une fonction de contrepoids et de maintien en position de travail sur le capteur de mesure.

4. Bouclier de protection thermique selon l'une des revendications 1 à 3, **caractérisé en ce que** les deux ailes sont de longueurs égales ou sensiblement égales.

5. Bouclier de protection selon la revendication 4, **caractérisé en ce que** chacune des deux ailes a successivement la fonction d'aile protectrice et la fonction d'aile support.

6. Bouclier de protection, selon la revendication 4 ou 5, **caractérisé en ce que** l'aile protectrice et l'aile support sont successivement solidarisées à un moyen support (B) amovible.

7. Bouclier de protection, selon l'une des revendications 4 à 6, **caractérisé en ce que** le moyen support (B) est réutilisable et exerce une fonction de contrepoids et de maintien en position de travail sur le capteur de mesure.

8. Bouclier de protection selon la revendication 1, **caractérisé en ce que** la longueur de l'aile support est inférieure à celle de l'aile protectrice.

9. Bouclier de protection selon la revendication 8, **caractérisé en ce que** l'aile support est solidarisée à un moyen support (B) amovible.

10. Bouclier de protection, selon la revendication 8 ou 9, **caractérisé en ce que** le moyen support (B) est réutilisable et exerce une fonction de contrepoids et de maintien en position de travail sur le capteur de mesure.

11. Bouclier de protection selon les revendications 2,3,6,7,9 ou 10, **caractérisé en ce que** le moyen support (B) est réalisé en un matériau amagnétique, non conducteur électrique et insensible aux ondes d'un champ magnétique.

12. Bouclier de protection selon l'une des revendications 2,3,6,7 ou 9 à 11, **caractérisé en ce que** le moyen support comporte éventuellement au moins un moyen d'accrochage (8) capable de coopérer avec un dispositif de manutention approprié pour la manipulation de ce bouclier afin d'en assurer la pose et la dépose à distance de sécurité suffisante de l'acier en fusion.
